# EUROPEAN PATENT SPECIFICATION

(11) **EP 0 558 472 B1**
(45) Date of publication and mention of the grant of the patent: **08.04.1998**
(21) Application number: 90917679.4
(22) Date of filing: 21.11.1990
(51) Int. Cl.: G10K 11/16, F01N 1/10, F01N 1/24

(54) **IMPROVEMENTS IN ATTENUATORS**
VERBESSERUNGEN AN SCHALLDÄMPFERN
AMELIORATIONS APPORTEES AUX AFFAIBLISSEURS

(43) Date of publication of application: 08.09.1993
(73) Proprietor: SOUND ATTENUATORS LIMITED, Colchester, Essex C01 2TW (GB)
(72) Inventor: FRY, Alan, Trevor, Essex CO4 5AU (GB)
(74) Representative: Newby, John Ross
(86) International application number: GB9001799
(87) International publication number: WO9209988

(56) References cited:
- DE-A- 3 132 169
- FR-A- 2 526 860
- US-A- 4 109 750

## Description

This invention relates to a ducted gas-filled acoustic attenuator and in particular to an improved arrangement of acoustic attenuating material in the duct of the attenuator.

It is known to attenuate duct-borne noise by means of duct sections which contain at least one mass of acoustic attenuating material. Usually the material lines the inside of the duct wall causing a localised restriction in the cross-sectional area available for gas flow through the duct. Further masses of attenuating material (usually known as "pods" or "splitters") are disposed inside the lined wall to further restrict the area available for gas flow. The more attenuating material there is in the duct, the better is likely to be the acoustic attenuation produced, whereas the less attenuating material there is in the duct the less resistance to gas flow there is likely to be. Resistance to gas flow is usually measured in terms of pressure loss, the aim normally being to achieve a low level of pressure loss commensurate with good acoustic performance. The design of a commercially successful acoustic attenuator thus involves a careful balancing of acoustic performance against pressure loss figures, subject always to manufacturing cost considerations.

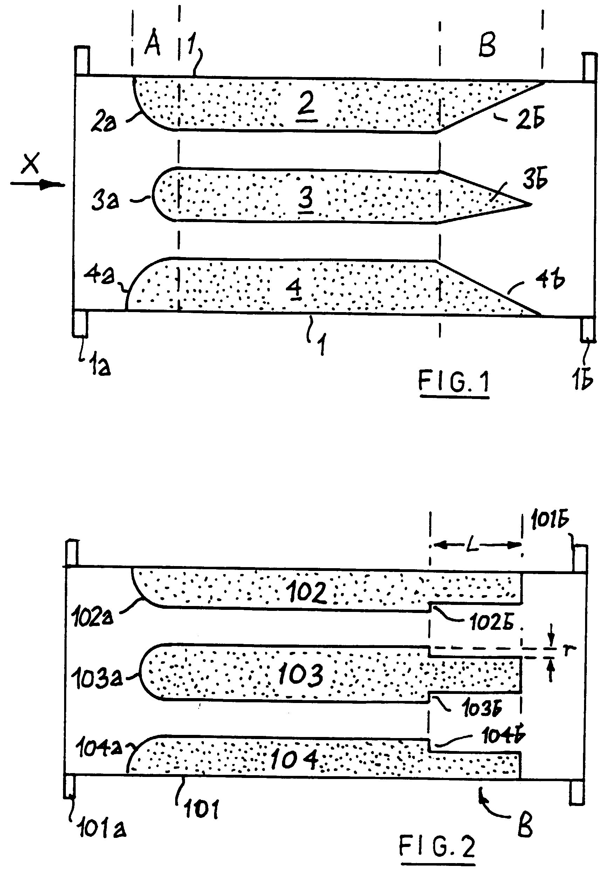

One way of reducing the pressure loss without reducing the mass of acoustic material in the duct is to aerodynamically shape the leading and trailing ends of each inserted mass and it is known to provide smoothly curved leading ends and tapered trailing ends for this purpose (see for example US Patent Specification 3511336). A typical cross-section of a prior art rectangular duct is shown in Figure 1 of the accompanying drawing, the duct being shown at 1, its flanges (for connecting to adjacent ducts - not shown) at 1a, 1b, wall lining facings at 2, 4 and a central splitter at 3. Curved noses 2a, 3a, 4a and tapered tail ends 2b, 3b and 4b complete the aerodynamic shaping of the facings and splitter for air flowing in the direction of the arrow X. The pressure loss in the duct 1 of Figure 1, assuming the flanges 1a and 1b are connected to further long lengths of empty duct, is made up of three factors, a) entry loss, occurring in region A, b) air passage loss (occurring due to an air friction on the confronting surfaces of facings 2, 4 and the splitter 3) and c) loss at the exit, occurring in region B. Of these three factors, the last, c), is frequently the largest and accordingly great attention has to be paid to the shaping of the acoustic attenuating material in the exit region B.

This invention relates to just such a tail end shaping of the gas passage defined between confronting surfaces of the acoustic attenuating material in the duct of the attenuator.

According to the invention at least one of said confronting surfaces exhibits a step producing a widening of the cross-section of the gas passage in the exit region. Conveniently a step is provided in both confronting surfaces and the two steps may be aligned (i.e. there is a sharp widening of the gas passage in two opposite directions at right angles to the flow direction of gas in the passage).

The invention can be applied to straight ducts and bends and to ducts of any cross-sectional shape but rectangular (e.g. square) and circular cross-sectional ducts are likely to predominate. In the case of a duct of circular cross-section, the splitter is sometimes referred to as a pod and is surrounded by one annular air passage formed between the pod and a tubular facing lining the interior of a cylindrical duct. In accordance with the invention an annular step is formed in the pod and/or the facing lining to produce a sharp widening of the annular gas passage in the exit region.

In the case of a bend, sound attenuating masses in the form of slabs of one thickness can be used in the inlet region of the passage leading to the bend and slabs of reduced thickness in the exit region thereby to produce a widening of the gas passage at the bend. The slabs can be located in the plane of the bend or normal thereto.

Where the slabs are disposed normal to the plane of the bend, curved strips can be used to bridge between one trailing edge of the upstream wide slab and one leading edge of the narrower downstream slab.

The acoustic attenuating material can be any of the prior art forms and mention can be made of foamed materials (e.g. rubber plastics or minerals), fibrous materials (e.g. mineral fibre mats or pads), particulate materials (bonded into aggregate blocks or contained in air permeable housings) or cork. Depending on the velocity of the gas flowing in the air passage, it may be necessary to face the attenuating material with a surfacing sheet to protect against erosion. Suitable prior art materials would be films or foils of metal or plastics, mineral fibre tissue, woven or non-woven cloths, nets or meshes, and perforated sheets of metal or plastics. In each case the surfacing sheet should exhibit the step producing the passage widening in the exit region.

The "rise" of the step and its extent in the flow direction of the gas in the passage are important parameters in the design of an attenuator in accordance with this invention. Too small a rise has negligible effect on pressure loss and too large a rise leads to a net gain in pressure loss. However, quite surprisingly, we have discovered that a sharp discontinuity in the tail end shaping of the gas passage, far from increasing factor (c) of the pressure loss as exemplified above, can actually reduce it.

To explain how this reduction can arise it should be appreciated that the pressure loss scenario of a duct attenuator in accordance with the invention consists of the three factors a), b) and c) already discussed to which must be added d) the pressure loss at the step or steps introduced into the passage.

The key to all these losses is the gas velocity change, whether it be an increase in velocity or a decrease in velocity. Except for a very long attenuator. the biggest loss is always the exit loss c) and the magnitude of each of the losses a) to d) is linked to a physical constant for a given geometry of the gas passage coupled with the velocity. Now, in fact, it is coupled to the velocity squared so pressure losses are very sensitive to changes in velocity and the known concept of using tapered trailing ends is to reduce the exit velocity.

The or each step itself, of course, introduces a pressure loss, as there is a velocity change across the step as the gas flow goes from fast to slower and there is another physical geometric change. However, with a step of modest dimension the physical constant involved is very small and it operates on not the absolute velocity squared of the gas passage, but the change in the velocity squared from the main part of the passage to the tail part of the passage. Also, when the gas slows up it leads to static pressure regain in all parameters of the attenuator. It is the static pressure loss that is of interest, so the slowing up process of the gas actually feeds back some pressure regain into the situation. This pressure regain is incorporated in the geometric loss constant for the step and under appropriate circumstances contributes to a reduced value of this constant.

However, pressure loss considerations are only one of the factors needed to be taken into account in the design of a commercially successful acoustic attenuator. Other factors are cost of production and acoustic performance.

Surprisingly the provision of at least one step to widen the gas passage in the exit region can reduce the cost of production and can give rise to such minor reductions in acoustic performance that they can readily be accepted in the face of the significant improvements flowing from the invention in the areas of pressure loss and cost.

On the cost of production, it should be noted that the provision of smooth aerodynamic shapes at the leading and trailing ends of a mass of acoustic attenuating material is generally expensive. Where acoustic material is housed in perforated containers to make duct facings, splitters or pods, the provision of smooth curves adds to production costs compared to fashioning steps (e.g. right angle bends). Further we find that since suppliers of bulk material market cheap ranges as slabs or blocks of rectangular shape, an ability to use such slabs or blocks in production with a minimum of further shaping inevitably cuts labour cost and reduces the volume of scrap material created during the manufacturing operation.

It will be appreciated that a simple step is introduced by having a splitter extension to the main splitter, which is, for instance, some 50 mm less in thickness. The exact extent of the step and the length of the add-on trailing end is an exact process of optimisation and, more importantly, a balance between gain in pressure loss, loss in acoustics and saving on production costs. In fact, there is an optimum in each particular case to the size of the step with respect to pressure loss, as too small a step is ineffective and too large a step leads to a net gain in pressure loss from the two resultant steps.

Finally we must consider further the effect of the one or more steps on acoustic performance.

The end region of the gas passage that includes the at least one step is wider, so that the flanking masses of acoustic material are thinner in that region and, thus, will have a lower acoustic performance per unit length. However, if the increase in width of the passage is only in the region of 30-50 mm and the change in thickness of the attenuating masses is fairly insignificant (say from 300-250 mm), this reduction may be acceptable. It transpires that the provision of the at least one step has advantages from an acoustic point of view, since changes in cross-section in any ductwork system lead to natural reactive attenuation losses, as is described in pages 416 to 418 of "Noise Reduction" by Leo L. Beranek and published in 1960 by McGraw-Hill. Whilst this effect will be small for a step of small "rise", it seems to act disproportionately well in favour of the new design, possibly linked to the fact that the published information is for a reactive muffler of all metal construction whilst here we have absorptive surfaces in the duct. Either way, experimental results indicate quite modest losses of acoustics, as spelt out later, and in broad-brush terms amount to a 1dB loss at all frequencies for the preferred trailing end configuration.

The trailing end configuration of each mass of acoustic material in the duct may have more than one step so that there is a successive widening of the air passage as each step is passed. It should be noted however that where such a plurality of steps are provided they should be acting as discrete steps and not placed so close together and given such small "rises", that they perform as a prior art tapered tail.

The invention will now be further described, by way of example, with reference to the following which should be read in conjunction with the accompanying drawings, in which
Figure 1 is the prior art arrangement already discussed,
Figure 2 is a view, similar to Figure 1 of a straight attenuator according to this invention,
Figures 3 to 5 are plots of static insertion loss (in dB) against frequency (in Hz) for three different straight attenuators according to the invention compared to similar attenuators without a step in the gas passage,
Figure 6 is a schematic partial perspective view of a bend attenuator according to the invention with the front wall removed for convenience of viewing, and
Figure 7 is a view similar to Figure 6 of a second embodiment of bend attenuator according to the invention.

In Figure 2 similar reference numbers plus 100 have been used to those used in Figure 1 to depict similar items.

The splitter or pod 103 and the or each facing 102, 104 is provided with a step 102b, 103b, 104b in the exit region B of length L. The rise of the step ("r" in Figure 2) can be varied between wide limits but will generally be in the range of 5 to 20% of the diameter of the pod or thickness of the splitter or facing layer. The length L of each step will typically be at least 5r and preferably 10r or more.

### Examples

The invention will now be further illustrated, by way of example, by giving the results obtained with six rectangular section test attenuators coded 3A, 3B; 5A, 5B and 7A, 7B. The test attenuators were effectively the upper half of the unit shown in Figure 2 and thus comprised two duct wall facing slabs (102 and 104) each of 150 mm thickness with a passage width of 250 mm between them. The duct was 600 mm wide.

The number in the code, is the overall length (in feet) of the slabs (measured in the flow direction). The A test attenuators have stepless slabs (r = 0) whereas the B test attenuators have a 25 mm step (dimension r) of 300 mm length (dimension L) at the trailing end of each slab. Thus these steps together widen the air passage to 300 mm and each step represents some 17% of the thickness of the slab in which it is formed and the ratio of post-step air passage width to pre-step air passage width is 1.2:1.

Set out below are the pressure loss geometric constants - k factors - employed with respect to the airflow face velocity or duct velocity. Results for the two three foot (0.91 m), five foot (1.52 m) and seven foot (2.13 m) units are shown below in Table 1.

**Table 1**

| Unit | k factor face | % reduction |
|---|---|---|
| 3A | 1.92 | |
| 3B | 1.27 | 34% |
| | | |
| 5A | 2.17 | |
| 5B | 1.45 | 33% |
| | | |
| 7A | 2.42 | |
| 7B | 1.83 | 24% |

It can thus be seen that the provision of the steps produces a significant reduction in the k factors recorded.

The static insertion losses as a function of frequency for each of the six attenuators discussed above are set out in the table below

**Table 2**

| Unit | 63 | 125 | 250 | 500 | 1k | 2k | 4k | 8kHz |
|---|---|---|---|---|---|---|---|---|
| 3A | 0 | 8 | 14 | 20 | 21 | 16 | 13 | 14dB |
| 3B | 0 | 8 | 13 | 19 | 20 | 14 | 11 | 11dB |
| | | | | | | | | |
| 5A | 3 | 12 | 20 | 30 | 31 | 22 | 16 | 15dB |
| 5B | 2 | 11 | 19 | 29 | 31 | 21 | 16 | 15dB |
| | | | | | | | | |
| 7A | 3 | 16 | 26 | 38 | 42 | 26 | 17 | 14dB |
| 7B | 3 | 15 | 24 | 37 | 40 | 25 | 17 | 13dB |

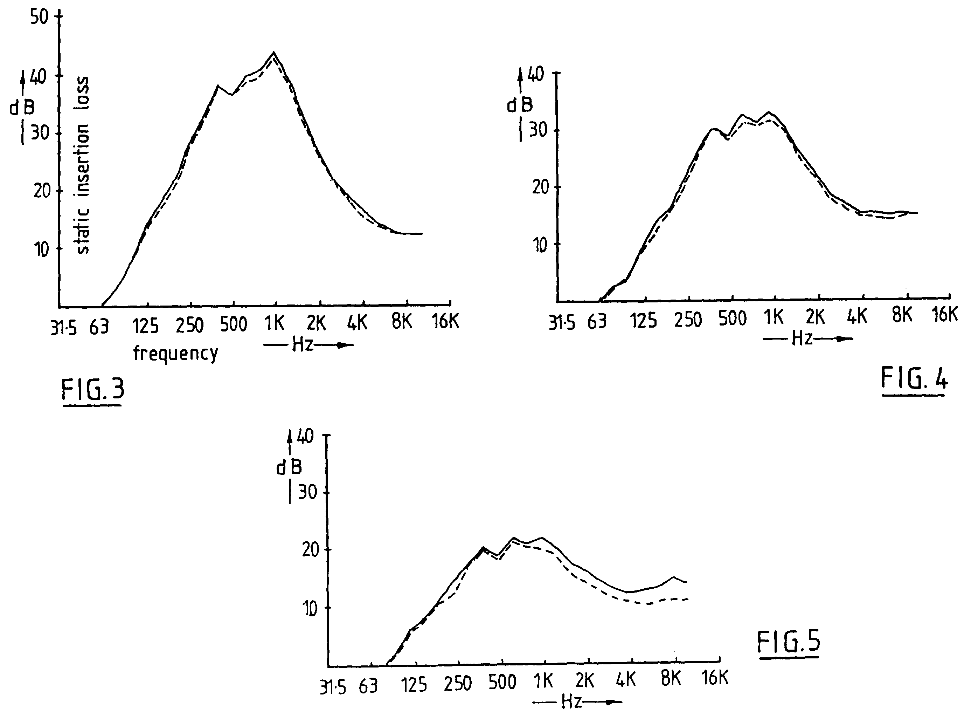

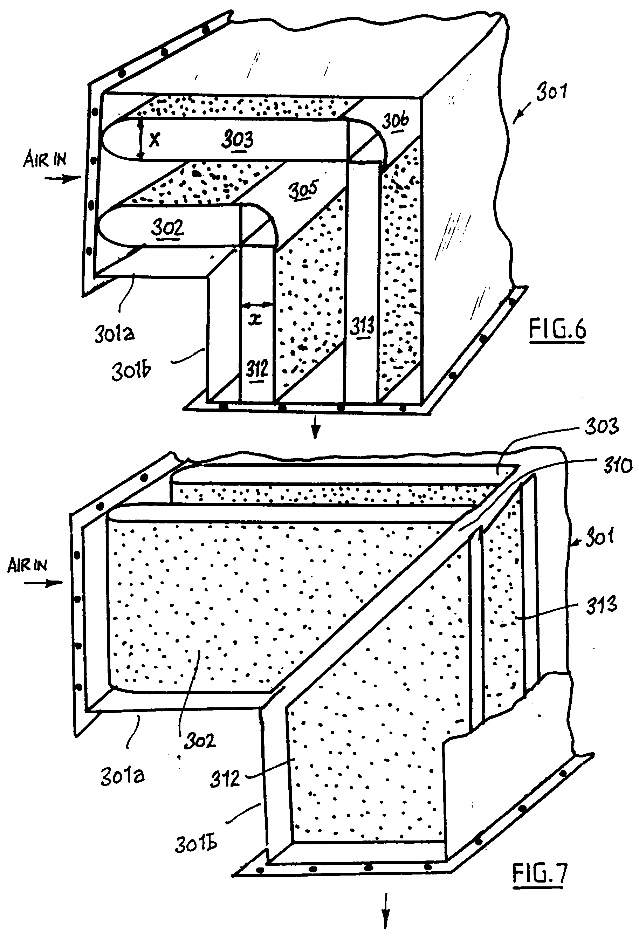

Although reductions in insertion loss occur in most octave bands as a result of adding the steps, the reductions are relatively small as can be more clearly seen from the graphs of Figures 3 to 5 which show the results of Table 2 graphically, Figure 3 representing 7A in solid line and 7B in dash line, Figure 4, 5A in solid line and 5B in dash line and Figure 5, 3A in solid line and 3B in dash line.

Generally speaking, any percentage improvement in the pressure loss feeds through as a half of this improvement in the final market price of an attenuator. Thus the 34% to 24% reductions noted in Table 1 should lead to a price reduction of around about 15%.

Although we have only given results for a single tail end step in each of two duct facing slabs the results are representative of a duct containing a stepped end splitter 103 as shown in Figure 2, since this can be considered as two test attenuators mounted one above the other. The provision of two steps in each slab 102, 103, 104 one after the other in the air flow direction also provides advantages over prior art designs.

Figures 6 and 7 show bend attenuators which utilise acoustic slabs 302, 303 of one thickness in an inlet region 301a of the bend 301 and thinner slabs 312, 313 in an exit region 301b of the bend.

As shown in Figure 6, the slabs 302, 303 have a thickness of X and the slabs 312, 313 a thickness of x where the "step" (X-x) is typically arranged to provide a gas passage width (normal to the slabs) in the exit region which is some 1.2 times the gas passage in the inlet region. A wide range of different "steps" is clearly possible depending on the design parameters to be met.

Figure 6 shows strips 305, 306 bridging across from one trailing edge of the upstream slab 302, 303 to one leading edge of the downstream slab 312, 313.

Figure 6 shows the slabs normal to the bend in the duct, but Figure 7 shows an equivalent case where the slabs lie in the plane of the bend both upstream and downstream. However, as before, the thickness of the slabs 302, 303 in the inlet region 301a of the duct exceed the thickness of the corresponding slabs 312, 313 in the exit region 301b. Turning vanes, not shown, can be located in the gap 310 shown between the mitred ends of the slabs 302, 312 and 303, 313.

The bend angle is 90° in both Figures 6 and 7 but this is not the only bend angle that can be used in an attenuator according to this invention.

## Claims (Claims for the following Contracting State(s): DK, SE)

1. An acoustic attenuator comprising at least two masses of sound attenuating material located in a duct with a gas passage provided between confronting surfaces of said at least two masses through which gas is intended to flow from an inlet region of the passage to an exit region thereof, characterized by at least one of said confronting surfaces exhibiting a step producing a widening of the cross-section of the gas passage in the exit region.

2. An attenuator according to claim 1, in which a step is provided in both confronting surfaces, the two steps being aligned to provide a sharp widening of the gas passage in two opposite directions at right angles to the flow direction of gas in the passage.

3. An attenuator according to claim 1 or claim 2, in which the duct is of circular cross-section containing a pod surrounded by one annular air passage formed between the pod and a tubular facing lining the interior of a cylindrical duct, an annular step being formed in the pod and/or the facing lining to produce a sharp widening of the annular gas passage in the exit region of the passage.

4. An attenuator in a duct of rectangular section according to claim 1 or claim 2, in which each mass of the sound attenuating material is fabricated from a slab of rectangular shape to provide the required step with a minimum of further shaping.

5. An attenuator according to claim 4, in which a step is introduced by having a narrower splitter slab abutting a wider main splitter slab.

6. An attenuator according to any preceding claim, in which the trailing end configuration of each mass of acoustic material in the duct has more than one step so that there is a successive widening of the air passage in the exit region as each step is passed.

7. An attenuator as claimed in claim 3, in which the rise (r) of the step in the pod is in the range 5 to 20% of the diameter of the pod.

8. An attenuator as claimed in claim 3 or claim 7, in which the rise (r) of the step in the tubular facing lining is in the range 5 to 20% of the thickness of the layer of attenuating material forming the facing lining.

9. An attenuator as claimed in claim 8, in which the length of each step (L) is at least 5r.

10. An acoustic bend attenuator comprising at least two masses of sound attenuating material located in a duct with a gas passage provided between confronting surfaces of said at least two masses through which gas is intended to flow from an inlet region of the passage extending in one direction to an exit region thereof extending in a different direction, characterised by at least one of said confronting surfaces exhibiting a step producing a widening of the cross-section of the gas passage in the exit region.

## Claims (Claims for the following Contracting State(s): GB)

1. An acoustic attenuator comprising at least two masses of sound attenuating material located in a duct with a gas passage provided between confronting surfaces of said at least two masses through which gas is intended to flow from an inlet region of the passage extending in one direction to an exit region thereof extending in a different direction, characterised by at least one of said confronting surfaces exhibiting a step producing a widening of the cross-section of the gas passage in the exit region.

2. An attenuator according to claim 1, in which a step is provided in both confronting surfaces, the two steps being aligned to provide a sharp widening of the gas passage in two opposite directions at right angles to the flow direction of gas in the passage.

3. An attenuator according to claim 1 or claim 2, in which the duct is of circular cross-section containing a pod surrounded by one annular air passage formed between the pod and a tubular facing lining the interior of the cylindrical duct, an annular step being formed in the pod and/or the facing lining to produce a sharp widening of the annular gas passage in the exit region of the passage.

4. An attenuator in a duct of rectangular section according to claim 1 or claim 2, in which each mass of the sound attenuating material is fabricated from a slab of rectangular shape to provide the required step with a minimum of further shaping.

5. An attenuator according to claim 4, in which a step is introduced by having a narrower splitter slab abutting a wider main splitter slab.

6. An attenuator according to any preceding claim, in which the trailing end configuration of each mass of acoustic material in the duct has more than one step so that there is a successive widening of the air passage in the exit region as each step is passed.

7. An attenuator as claimed in claim 3, in which the rise (r) of the step in the pod is in the range 5 to 20% of the diameter of the pod.

8. An attenuator as claimed in claim 3 or claim 7, in which the rise (r) of the step in the tubular facing lining is in the range 5 to 20% of the thickness of the layer of attenuating material forming the facing lining.

9. An attenuator as claimed in claim 8, in which the length of each step (L) is at least 5r.

## Patentansprüche (Patentansprüche für folgende(n) Vertragsstaat(en): DK, SE)

1. Schalldämpfer mit mindestens zwei Massen aus schalldämpfendem Material, die sich in einer Rohrleitung befinden, wobei zwischen gegenüberliegenden Flächen der mindestens zwei Massen ein Gasdurchgang vorgesehen ist, durch den Gas von einem Einlaßbereich des Durchgangs zu einem Austrittsbereich davon strömen soll, dadurch gekennzeichnet, daß mindestens eine der sich gegenüberliegenden Flächen eine Stufe aufweist, die eine Verbreiterung des Querschnitts des Gasdurchgangs im Austrittsbereich erzeugt.

2. Dämpfer nach Anspruch 1, bei dem in beiden sich gegenüberliegenden Flächen eine Stufe vorgesehen ist, wobei die beiden Stufen so ausgerichtet sind, daß sie eine abrupte Verbreiterung des Gasdurchgangs in zwei entgegengesetzten Richtungen im rechten Winkel zur Strömungsrichtung des Gases im Durchgang bilden.

3. Dämpfer nach Anspruch 1 oder 2, bei dem die Rohrleitung einen kreisförmigen Querschnitt aufweist und einen zigarrenförmigen Körper enthält, der von einem ringförmigen Luftdurchgang umgeben ist, der zwischen dem zigarrenförmigen Körper und einem rohrförmigen Belag, mit dem das Innere einer zylindrischen Rohrleitung ausgekleidet ist, ausgebildet ist, wobei in dem zigarrenförmigen Körper und/oder dem auskleidenden Belag eine ringförmige Stufe so ausgebildet ist, daß sie eine abrupte Verbreiterung des ringförmigen Gasdurchgangs in dessen Austrittsbereich erzeugt.

4. Dämpfer in einer Rohrleitung von rechteckigem Querschnitt nach Anspruch 1 oder 2, wobei jede Masse des schalldämpfenden Materials aus einer Platte mit rechteckiger Form gefertigt ist, um die erforderliche Stufe mit einem Minimum an weiter Formgebung zu bilden.

5. Dämpfer nach Anspruch 4, bei dem eine Stufe eingebracht wird, indem eine schmalere Spalterplatte an eine breitere Hauptspalterplatte anstößt.

6. Dämpfer nach einem der vorhergehenden Ansprüche, bei dem die Hinterend-Auslegung jeder Masse aus Schallmaterial in der Rohrleitung mehr als eine Stufe aufweist, damit es beim Vorbeigang an jeder Stufe zu einer schrittweisen Verbreiterung des Luftdurchgangs im Austrittsbereich kommt.

7. Dämpfer nach Anspruch 3, bei dem der Anstieg (r) der Stufe in dem zigarrenförmigen Körper im Bereich von 5 bis 20% des Durchmessers des zigarrenförmigen Körpers liegt.

8. Dämpfer nach Anspruch 3 oder 7, bei dem der Anstieg (r) der Stufe in dem rohrförmigen Auskleidungsbelag im Bereich von 5 bis 20% der Dicke der Schicht des dämpfenden Materials liegt, das den Auskleidungsbelag bildet.

9. Dämpfer nach Anspruch 8, bei dem die Länge jeder Stufe (L) mindestens 5r beträgt.

10. Gekrümmter Schalldämpfer mit mindestens zwei Massen aus schalldämpfendem Material, die sich in einer Rohrleitung befinden, wobei zwischen gegenüberliegenden Flächen der mindestens zwei Massen ein Gasdurchgang vorgesehen ist, durch den Gas von einem sich in einer Richtung erstreckenden Einlaßbereich des Durchgangs zu einem sich in einer anderen Richtung erstreckenden Austrittsbereich davon strömen soll, dadurch gekennzeichnet, daß mindestens eine der sich gegenüberliegenden Flächen eine Stufe aufweist, die eine Verbreiterung des Querschnitts des Gasdurchgangs im Austrittsbereich erzeugt.

## Patentansprüche (Patentansprüche für folgende(n) Vertragsstaat(en): GB)

1. Schalldämpfer mit mindestens zwei Massen aus schalldämpfendem Material, die sich in einer Rohrleitung befinden, wobei zwischen gegenüberliegenden Flächen der mindestens zwei Massen ein Gasdurchgang vorgesehen ist, durch den Gas von einem sich in einer Richtung erstreckenden Einlaßbereich des Durchgangs zu einem sich in einer anderen Richtung erstreckenden Austrittsbereich davon strömen soll, dadurch gekennzeichnet, daß mindestens eine der sich gegenüberliegenden Flächen eine Stufe aufweist, die eine Verbreiterung des Querschnitts des Gasdurchgangs im Austrittsbereich erzeugt.

2. Dämpfer nach Anspruch 1, bei dem in beiden sich gegenüberliegenden Flächen eine Stufe vorgesehen ist, wobei die beiden Stufen so ausgerichtet sind, daß sie eine abrupte Verbreiterung des Gasdurchgangs in zwei entgegengesetzten Richtungen im rechten Winkel zur Strömungsrichtung des Gases im Durchgang bilden.

3. Dämpfer nach Anspruch 1 oder 2, bei dem die Rohrleitung einen kreisförmigen Querschnitt aufweist und einen zigarrenförmigen Körper enthält, der von einem ringförmigen Luftdurchgang umgeben ist, der zwischen dem zigarrenförmigen Körper und einem rohrförmigen Belag, mit dem das Innere der zylindrischen Rohrleitung ausgekleidet ist, ausgebildet ist, wobei in dem zigarrenförmigen Körper und/oder dem auskleidenden Belag eine ringförmige Stufe so ausgebildet ist, daß sie eine abrupte Verbreiterung des ringförmigen Gasdurchgangs in dessen Austrittsbereich erzeugt.

4. Dämpfer in einer Rohrleitung von rechteckigem Querschnitt nach Anspruch 1 oder 2, wobei jede Masse des schalldämpfenden Materials aus einer Platte mit rechteckiger Form gefertigt ist, um die erforderliche Stufe mit einem Minimum an weiter Formgebung zu bilden.

5. Dämpfer nach Anspruch 4, bei dem eine Stufe eingebracht wird, indem eine schmalere Spalterplatte an eine breitere Hauptspalterplatte anstößt.

6. Dämpfer nach einem der vorhergehenden Ansprüche, bei dem die Hinterend-Auslegung jeder Masse aus Schallmaterial in der Rohrleitung mehr als eine Stufe aufweist, damit es beim Vorbeigang an jeder Stufe zu einer schrittweisen Verbreiterung des Luftdurchgangs im Austrittsbereich kommt.

7. Dämpfer nach Anspruch 3, bei dem der Anstieg (r) der Stufe in dem zigarrenförmigen Körper im Bereich von 5 bis 20% des Durchmessers des zigarrenförmigen Körpers liegt.

8. Dämpfer nach Anspruch 3 oder 7, bei dem der Anstieg (r) der Stufe in dem rohrförmigen Auskleidungsbelag im Bereich von 5 bis 20% der Dicke der Schicht des dämpfenden Materials liegt, das den Auskleidungsbelag bildet.

9. Dämpfer nach Anspruch 8, bei dem die Länge jeder Stufe (L) mindestens 5r beträgt.

## Revendications (Revendications pour l'(les) Etat(s) contractant(s) suivant(s): DK, SE)

1. Atténuateur acoustique comprenant au moins deux masses de matériau atténuant le son situées dans un conduit, un passage de gaz étant prévu entre des surfaces en regard desdites au moins deux masses à travers lequel du gaz est amené à s'écouler depuis une zone d'entrée du passage jusqu'à une zone de sortie de celui-ci, caractérisé en ce qu'au moins une desdites surfaces en regard présente un gradin produisant un élargissement de la section transversale du passage de gaz dans la zone de sortie.

2. Atténuateur selon la revendication 1, dans lequel un gradin est prévu dans les deux surfaces en regard, les deux gradins étant alignés pour fournir un élargissement marqué du passage de gaz dans deux directions opposées à angles droits par rapport au sens d'écoulement du gaz dans le passage.

3. Atténuateur selon la revendication 1 ou la revendication 2, dans lequel le conduit est de section transversale circulaire contenant une lentille allongée entourée d'un passage d'air annulaire formé entre la lentille allongée et un revêtement de surface tubulaire sur l'intérieur d'un conduit cylindrique, un gradin annulaire étant formé dans la lentille allongée et/ou le revêtement de surface pour produire un élargissement marqué du passage de gaz annulaire dans la zone de sortie du passage.

4. Atténuateur dans un conduit de section rectangulaire selon la revendication 1 ou la revendication 2, dans lequel chaque masse du matériau atténuant le son est fabriquée à partir d'un pavé de forme rectangulaire pour fournir le gradin requis avec une mise en forme supplémentaire minimale.

5. Atténuateur selon la revendication 4, dans lequel un gradin est introduit en mettant bout à bout un pavé diviseur plus étroit et un pavé diviseur principal plus large.

6. Atténuateur selon l'une quelconque des revendications précédentes, dans lequel la configuration de l'extrémité de fuite de chaque masse de matériau acoustique dans le conduit présente plus d'un gradin, de manière à obtenir, au passage de chaque gradin, un élargissement successif du passage d'air dans la zone de sortie.

7. Atténuateur selon la revendication 3, dans lequel la hauteur (r) du gradin dans la lentille allongée se situe dans la plage de 5 à 20% du diamètre de la lentille allongée.

8. Atténuateur selon la revendication 3 ou la revendication 7, dans lequel la hauteur (r) du gradin dans le revêtement de surface tubulaire se situe dans la plage de 5 à 20% de l'épaisseur de la couche de matériau atténuateur formant le revêtement de surface.

9. Atténuateur selon la revendication 8, dans lequel la longueur de chaque gradin (L) est d'au moins 5r.

10. Atténuateur acoustique coudé comprenant au moins deux masses de matériau atténuant le son situées dans un conduit, un passage de gaz étant prévu entre des surfaces en regard desdites au moins deux masses à travers lequel du gaz est amené à s'écouler depuis une zone d'entrée du passage se prolongeant dans une direction jusqu'à une zone de sortie de celui-ci se prolongeant dans une direction différente, caractérisé en ce qu'au moins une desdites surfaces en regard présente un gradin produisant un élargissement de la section transversale du passage de gaz dans la zone de sortie.

## Revendications (Revendications pour l'(les) Etat(s) contractant(s) suivant(s): GB)

1. Atténuateur acoustique comprenant au moins deux masses de matériau atténuant le son situées dans un conduit, un passage de gaz étant prévu entre des surfaces en regard desdites au moins deux masses à travers lequel du gaz est amené à s'écouler depuis une zone d'entrée du passage se prolongeant dans une direction, jusqu'à une zone de sortie de celui-ci se prolongeant dans une direction différente, caractérisé en ce qu'au moins une desdites surfaces en regard présente un gradin produisant un élargissement de la section transversale du passage de gaz dans la zone de sortie.

2. Atténuateur selon la revendication 1, dans lequel un gradin est prévu dans les deux surfaces en regard, les deux gradins étant alignés pour fournir un élargissement marqué du passage de gaz dans deux directions opposées à angles droits par rapport au sens d'écoulement du gaz dans le passage.

3. Atténuateur selon la revendication 1 ou la revendication 2, dans lequel le conduit est de section transversale circulaire contenant une lentille allongée entourée d'un passage d'air annulaire formé entre la lentille allongée et un revêtement de surface tubulaire sur l'intérieur du conduit cylindrique, un gradin annulaire étant formé dans la lentille allongée et/ou le revêtement de surface pour produire un élargissement marqué du passage de gaz annulaire dans la zone de sortie du passage.

4. Atténuateur dans un conduit de section rectangulaire selon la revendication 1 ou la revendication 2, dans lequel chaque masse du matériau atténuant le son est fabriquée à partir d'un pavé de forme rectangulaire pour fournir le gradin requis avec une mise en forme supplémentaire minimale.

5. Atténuateur selon la revendication 4, dans lequel un gradin est introduit en mettant bout à bout un pavé diviseur plus étroit et un pavé diviseur principal plus large.

6. Atténuateur selon l'une quelconque des revendications précédentes, dans lequel la configuration de l'extrémité de fuite de chaque masse de matériau acoustique dans le conduit présente plus d'un gradin, de manière à obtenir, au passage de chaque gradin, un élargissement successif du passage d'air dans la zone de sortie.

7. Atténuateur selon la revendication 3, dans lequel la hauteur (r) du gradin dans la lentille allongée se situe dans la plage de 5 à 20% du diamètre de la lentille allongée.

8. Atténuateur selon la revendication 3 ou la revendication 7, dans lequel la hauteur (r) du gradin dans le revêtement de surface tubulaire se situe dans la plage de 5 à 20% de l'épaisseur de la couche de matériau atténuateur formant le revêtement de surface.

9. Atténuateur selon la revendication 8, dans lequel la longueur de chaque gradin (L) est d'au moins 5r.
